# EUROPEAN PATENT APPLICATION

(11) **EP 4 561 159 A1**
(43) Date of publication of application: **28.05.2025**
(21) Application number: 23851815.3
(22) Date of filing: 08.08.2023
(51) Int. Cl.: H04W 24/08

(54) **COMMUNICATION METHOD AND COMMUNICATION APPARATUS**

(30) Priority: 09.08.2022 CN 202210958691
(71) Applicant: Huawei Technologies Co., Ltd., Shenzhen, Guangdong 518129 (CN)
(72) Inventor: ZHANG, Li, Shenzhen, Guangdong 518129 (CN); ZHENG, Lili, Shenzhen, Guangdong 518129 (CN); HU, Xingxing, Shenzhen, Guangdong 518129 (CN)
(74) Representative: Goddar, Heinz J.
(86) International application number: PCT/CN2023/111697
(87) International publication number: WO 2024/032594

(57) **Abstract**

This application provides a communication method and a communication apparatus. The method includes: A terminal device receives configuration information of a first measurement target, where the configuration information of the first measurement target indicates a first time window, and the first time window is associated with one or more target cells; the terminal device determines a first offset of the first time window, where the first offset is a time domain position of the first time window based on a timing reference of a first serving cell; and the terminal device measures the first measurement target in the first time window. Therefore, when a serving cell cannot configure an SMTC offset for each terminal, the terminal device may determine the SMTC offset and measure a measurement target.

## Description

This application claims priority to Chinese Patent Application No. 202210958691.0, filed with the China National Intellectual Property Administration on August 9, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Satellite networks are a hot topic studied in the world nowadays. Satellite communication technologies have gradually become mature and can provide high-speed network access and interactive multimedia services.

Measurement in NR is based on a synchronization signal block measurement timing configuration (SSB measurement timing configuration, SMTC). For example, when configuring a terminal to measure a specific frequency, a network configures an SMTC of the frequency. The terminal determines, based on the SMTC, a window that periodically occurs. During measurement, the terminal performs search in only the SMTC window and measures only a synchronization signal block (Synchronization Signal and PBCH block, SSB) in the SMTC window. Therefore, when configuring the SMTC, the network needs to ensure that SSBs at all frequencies fall within the SMTC window at the frequency. An SMTC offset is determined based on a timing of a serving cell. In a TN scenario, propagation delays (propagation delay, PD) of the serving cell and a neighboring cell are nearly the same. Therefore, user equipment UE can directly use the SMTC offset for measurement.

In an NTN scenario, a propagation delay from the serving cell to the UE is different from a propagation delay from the neighboring cell to the UE, and varies with time in a LEO scenario. Therefore, the SMTC configured by the network cannot be directly used.

In the conventional technology, it is assumed that an NTN neighboring cell has timing information of a to-be-measured neighboring cell. Therefore, an SMTC offset may be configured for a to-be-measured frequency. However, actually, a serving cell of a terminal device may not have timing information of a target cell, or target cell timings of different terminal devices in a coverage area of a serving cell are different. In this case, the serving cell cannot configure an independent SMTC offset for each terminal device.

Therefore, when a serving cell cannot configure an SMTC offset for each terminal, how the terminal device measures a measurement target based on an SMTC becomes a problem that is worthy of attention.

### SUMMARY

This application provides a communication method and a communication apparatus, to resolve a problem of how a terminal device measures a measurement target in an SMTC scenario.

According to a first aspect, a communication method is provided. The method may be performed by a terminal device, or may be performed by a chip or a circuit configured in the terminal device, or may be performed by a logical module or software that can implement all or some functions of the terminal device. This is not limited in this application.

The method includes: The terminal device receives configuration information of a first measurement target, where the configuration information of the first measurement target indicates a first time window, and the first time window is associated with one or more target cells; the terminal device determines a first offset of the first time window, where the first offset is a time domain position of the first time window based on a timing reference of a first serving cell; and the terminal device measures the first measurement target in the first time window.

According to this technical solution, the terminal device determines the first time window from the configuration information based on an indication of a network device, and the terminal device may determine the first offset of the first time window from the configuration information, so that the terminal device can measure the first measurement target in an idle mode or an inactive mode.

It may be understood that, if a serving cell has timing information of a to-be-measured target cell, the network device may configure the first offset of the first time window; or if a serving cell does not have timing information of a to-be-measured target cell, or target cell timings learned by different terminals in a coverage area of a serving cell are different, the network device may not configure the first offset of the first time window.

With reference to the first aspect, in a possible implementation, the terminal device determines the first offset based on locations of synchronization signal blocks SSBs of the one or more target cells associated with the first time window.

With reference to the first aspect, in a possible implementation, the terminal device does not receive the first offset from the network device.

In this solution, when the network device does not configure the first offset of the first time window, the terminal device performs blind search on the measurement target, and autonomously determines the first offset of the first time window, to perform measurement. When the serving cell does not have timing information of the to-be-measured target cell, or target cell timings learned by different terminals in a coverage area of the serving cell are different, measurement on the first measurement target is enabled.

With reference to the first aspect, in a possible implementation, the terminal device determines a first cell from the one or more target cells associated with the first time window; and the terminal device determines the first offset based on a location of an SSB of the first cell.

With reference to the first aspect, in a possible implementation, the terminal device receives first indication information, where the first indication information indicates an identifier of the first cell.

In this solution, the network may indicate a reference cell associated with a specific SMTC to the terminal. When one SMTC is associated with a plurality of to-be-measured neighboring cells, the terminal may determine the first offset based on a neighboring cell corresponding to the reference cell, so that behavior of determining an SMTC offset by the terminal is clarified. For example, the network may set a neighboring cell with a relatively high priority as a reference, to ensure that the neighboring cell can be measured by the terminal (an SSB of the neighboring cell is within an SMTC determined or adjusted by the terminal).

With reference to the first aspect, in a possible implementation, the terminal device receives second indication information, where the second indication information indicates an identifier of a first ephemeris.

In this solution, the network may indicate a reference ephemeris associated with a specific SMTC to the terminal. When one SMTC is associated with a plurality of to-be-measured neighboring cells, the terminal may determine the first offset based on a neighboring cell corresponding to the reference ephemeris, so that behavior of determining an SMTC offset by the terminal is clarified. For example, the network may set a satellite with a relatively high priority as a reference, to ensure that the satellite can be measured by the terminal (an SSB of the satellite is within an SMTC determined or adjusted by the terminal).

According to a second aspect, a communication method is provided. The method may be performed by a terminal device, or may be performed by a chip or a circuit configured in the terminal device, or may be performed by a logical module or software that can implement all or some functions of the terminal device. This is not limited in this application.

The method includes: The terminal device receives configuration information of a first measurement target, where the configuration information of the first measurement target indicates a first time window and a first offset, the first time window is associated with one or more target cells, and the first offset is a time domain position of the first time window based on a timing reference of a first serving cell; and the terminal device measures the first measurement target in the first time window.

According to this technical solution, if a serving cell has timing information of a to-be-measured target cell, a network device may configure the first offset of the first time window, so that the terminal device is enabled to measure the first measurement target in an idle mode or an inactive mode.

With reference to the first aspect and the second aspect, in a possible implementation, the first measurement target is a terrestrial network TN frequency, and the terminal device determines a second offset based on a propagation delay of the first serving cell, where the second offset is used to adjust the first offset.

In this solution, when the one or more target cells associated with the first time window are TN cells, for the terminal in the idle/inactive mode, the terminal device determines the second offset based on the propagation delay of the serving cell, and adjusts the first offset by using the second offset. This can ensure that when the propagation delay of the serving cell changes, an SSB of the TN cell is always within an SMTC.

With reference to the first aspect and the second aspect, in a possible implementation, the terminal device determines a second offset based on a propagation delay difference between the first serving cell and the one or more target cells associated with the first time window, where the second offset is used to adjust the first offset, the propagation delay difference is a difference between a first delay and a second delay, the first delay is a propagation delay between a network device to which the one or more target cells belong and the terminal device, and the second delay is a propagation delay between a network device to which the first serving cell belongs and the terminal device.

With reference to the first aspect and the second aspect, in a possible implementation, the terminal device determines a second cell from the one or more target cells associated with the first time window; and the terminal device determines the second offset based on a propagation delay difference between the second cell and the first serving cell.

With reference to the first aspect and the second aspect, in a possible implementation, the terminal device receives third indication information, where the third indication information indicates an identifier of the second cell.

In this solution, the network may indicate a reference cell associated with a specific SMTC to the terminal. When one SMTC is associated with a plurality of to-be-measured neighboring cells, the terminal may determine the second offset based on a neighboring cell corresponding to the reference cell, so that behavior of adjusting an SMTC offset by the terminal is clarified. For example, the network may set a neighboring cell with a relatively high priority as a reference, to ensure that the neighboring cell can be measured by the terminal (an SSB of the neighboring cell is within an SMTC determined or adjusted by the terminal).

With reference to the first aspect and the second aspect, in a possible implementation, the terminal device receives fourth indication information, where the fourth indication information indicates an identifier of a second ephemeris; and the terminal device determines, based on the identifier of the second ephemeris, an identifier of the second cell corresponding to the second ephemeris.

In this solution, the network may indicate a reference ephemeris associated with a specific SMTC to the terminal. When one SMTC is associated with a plurality of to-be-measured neighboring cells, the terminal may determine the second offset based on a neighboring cell corresponding to the reference ephemeris, so that behavior of adjusting an SMTC offset by the terminal is clarified. For example, the network may set a satellite with a relatively high priority as a reference, to ensure that the satellite can be measured by the terminal (an SSB of the satellite is within an SMTC determined or adjusted by the terminal).

With reference to the first aspect and the second aspect, in a possible implementation, the first measurement target is a TN frequency, and when the terminal device determines the second offset of the first measurement target based on the propagation delay difference between the first serving cell and the one or more target cells associated with the first time window, the terminal device assumes that a real propagation delay of the target cell is 0.

In this solution, when the one or more target cells associated with the first time window are TN cells, for the terminal in the idle/inactive mode, the terminal device determines the second offset based on the propagation delay difference between the serving cell and the target cell, assumes that the real propagation delay of the target cell is 0, and adjusts the first offset by using the second offset. This can ensure that when the propagation delay of the serving cell changes, an SSB of the TN cell is always within an SMTC.

With reference to the first aspect and the second aspect, in a possible implementation, the terminal device determines the second offset of the first measurement target based on the propagation delay difference between the first serving cell and the one or more target cells associated with the first time window, and the method includes: The terminal device determines a first propagation delay difference corresponding to the first time window; the terminal device determines a second propagation delay difference, at a measurement moment, between the first serving cell and the one or more target cells associated with the first time window; and the terminal device determines the second offset based on a difference between the first propagation delay difference and the second propagation delay difference.

With reference to the first aspect and the second aspect, in a possible implementation, the configuration information of the first measurement target further indicates the first offset, and the terminal device determines, based on an indication of the network device or a predefined value, the first propagation delay difference corresponding to the first time window; or the configuration information of the first measurement target does not indicate the first offset, the terminal device determines that a real value, at a first moment, of the propagation delay difference between the first serving cell and the one or more target cells associated with the first time window is the first propagation delay difference corresponding to the first time window, and the first moment is a moment at which the terminal device determines the first offset.

It may be understood that the first propagation delay difference is a reference value or an assumed value of a propagation delay difference corresponding to the first time window.

With reference to the first aspect and the second aspect, in a possible implementation, that the terminal device determines a second propagation delay difference, at a measurement moment, between the first serving cell and the one or more target cells associated with the first time window includes: If the one or more target cells associated with the first time window are NTN neighboring cells, the terminal device determines, based on location information of the terminal device, ephemeris information of the neighboring cell, and feed circuit propagation delay information indicated by the network device, a real propagation delay of the one or more target cells associated with the first time window; or if the one or more target cells associated with the first time window are TN cells, the terminal device determines that a real propagation delay of the one or more target cells associated with the first time window is 0.

It may be understood that the first propagation delay difference is a real value of a propagation delay difference corresponding to the first time window.

In this solution, for the terminal in the idle/inactive mode, the terminal device determines the second offset based on a difference between a reference value and a real value of the propagation delay difference between the serving cell and the target cell. It is assumed that the real propagation delay of the TN target cell is 0, and the first offset is adjusted by using the second offset, so that it can be ensured that when the propagation delay of the serving cell changes, an SSB of the target cell is always within an SMTC.

With reference to the first aspect and the second aspect, in a possible implementation, when the terminal device enters a connected mode from an inactive mode or an idle mode, the terminal device sends fifth indication information, where the fifth indication information is the first offset, or the fifth indication information is a sum of the first offset and the second offset, or the fifth indication information is a frame number and frame header timing difference, the fifth indication information is used by the network device to determine a third offset, and the third offset is used by the terminal device to measure the first measurement target in a second time window in the connected mode.

In this solution, when the terminal in the idle/inactive mode enters the connected mode, the terminal provides auxiliary information for the network device. When a serving cell does not have timing information of a to-be-measured target cell, or target cell timings learned by different terminals in a coverage area of a serving cell are different, timing information of a target cell near the terminal device is provided for the network device. The network device may configure, based on the fifth indication information, an SMTC offset for measurement of the terminal device in the connected mode. Compared with the conventional technology in which SFTD measurement and reporting are performed after a terminal enters a connected mode, this solution avoids an additional delay and an interruption caused by SFTD measurement in the connected mode.

According to a third aspect, a communication method is provided. The method may be performed by a network device, or may be performed by a chip or a circuit configured in the network device, or may be performed by a logical module or software that can implement all or some functions of the network device. This is not limited in this application.

The method includes: The network device determines configuration information of a first measurement target, where the configuration information of the first measurement target indicates a first time window, the first time window is associated with one or more target cells, the configuration information of the first measurement target does not indicate a first offset, and the first offset is a time domain position of the first time window based on a timing reference of a first serving cell; and the network device sends the configuration information of the first measurement target, where the configuration information of the first measurement target is used by a terminal device to measure the first measurement target in the first time window.

According to the foregoing technical solution, if a serving cell does not have timing information of a to-be-measured target cell, or target cell timings learned by different terminals in a coverage area of a serving cell are different, the network device may not configure the first offset of the first time window. When the network device does not configure the first offset of the first time window, the terminal device autonomously determines the first offset of the first time window, so that the terminal device can measure the first measurement target in an idle mode or an inactive mode.

With reference to the third aspect, in a possible implementation, the network device sends first indication information, where the first indication information indicates an identifier of a first cell, and the identifier of the first cell is used by the terminal device to determine the first offset.

In this solution, when the network device does not configure the first offset of the first time window, the terminal device performs blind search on the measurement target, and autonomously determines the first offset of the first time window, to perform measurement. The network device may indicate the terminal to determine the first offset based on a neighboring cell corresponding to a reference cell, so that behavior of determining an SMTC offset by the terminal is clarified. For example, the network may set a neighboring cell with a relatively high priority as a reference, to ensure that the neighboring cell can be measured by the terminal (an SSB of the neighboring cell is within an SMTC determined or adjusted by the terminal).

With reference to the third aspect, in a possible implementation, the network device sends second indication information, where the first indication information indicates an identifier of a first ephemeris, and the identifier of the first ephemeris is used by the terminal device to determine the first offset.

In this solution, when the network device does not configure the first offset of the first time window, the terminal device performs blind search on the measurement target, and autonomously determines the first offset of the first time window, to perform measurement. The network device may indicate the terminal to determine the first offset based on a neighboring cell corresponding to a reference ephemeris, so that behavior of determining an SMTC offset by the terminal is clarified. For example, the network may set a satellite with a relatively high priority as a reference, to ensure that the satellite can be measured by the terminal (an SSB of the satellite is within an SMTC determined or adjusted by the terminal).

With reference to the third aspect, in a possible implementation, the network device sends third indication information, where the third indication information indicates an identifier of a second cell, the identifier of the second cell is used by the terminal device to determine a second offset, and the second offset is used to adjust the first offset.

In this solution, the network may indicate a reference cell associated with a specific SMTC to the terminal. When one SMTC is associated with a plurality of to-be-measured neighboring cells, the terminal may determine the second offset based on a neighboring cell corresponding to the reference cell, so that behavior of adjusting an SMTC offset by the terminal is clarified. For example, the network may set a neighboring cell with a relatively high priority as a reference, to ensure that the neighboring cell can be measured by the terminal (an SSB of the neighboring cell is within an SMTC determined or adjusted by the terminal).

With reference to the third aspect, in a possible implementation, the network device sends fourth indication information, where the fourth indication information indicates an identifier of a second ephemeris, and the identifier of the second ephemeris is used by the terminal device to determine a second offset.

In this solution, the network may indicate a reference ephemeris associated with a specific SMTC to the terminal. When one SMTC is associated with a plurality of to-be-measured neighboring cells, the terminal may determine the second offset based on a neighboring cell corresponding to the reference ephemeris, so that behavior of adjusting an SMTC offset by the terminal is clarified. For example, the network may set a satellite with a relatively high priority as a reference, to ensure that the satellite can be measured by the terminal (an SSB of the satellite is within an SMTC determined or adjusted by the terminal).

With reference to the third aspect, in a possible implementation, when the terminal device enters a connected mode from an inactive mode or an idle mode, the network device receives fifth indication information, where the fifth indication information is at least one of the first offset, a sum of the first offset and the second offset, and a frame number and frame header timing difference, the first offset is the time domain position of the first time window based on the timing reference of the first serving cell, and the second offset is used to adjust the first offset; and the network device determines a third offset based on the fifth indication information, where the third offset is used by the terminal device to measure the first measurement target in a second time window in the connected mode.

In this solution, the UE in the idle/inactive mode performs blind search to determine an SMTC offset or an SFTD, and reports the SMTC offset or the SFTD to the network when entering the connected mode, so that the network can obtain timing information of a neighboring cell when the UE enters the connected mode, to configure an SMTC for measurement in the connected mode. The network device may configure, based on the fifth indication information, an SMTC offset for measurement of the terminal device in the connected mode. Compared with the conventional technology in which SFTD measurement and reporting are performed after a terminal enters a connected mode, this solution avoids an additional delay and an interruption caused by SFTD measurement in the connected mode.

With reference to the third aspect, in a possible implementation, the first measurement target is a TN frequency, and the network device adjusts the third offset based on a terminal-specific timing advance TA reported by the terminal device in the connected mode.

In this solution, the network device configures the second time window and the third offset corresponding to the second time window for the UE in the connected mode to measure a first target frequency. The third offset is a time domain position of the second time window based on the timing reference of the first serving cell. The UE in the connected mode reports the terminal-specific timing advance TA (UE-specific TA), and the network device determines a propagation delay between the UE and the serving cell based on the terminal-specific timing advance TA. In addition, it is assumed that the propagation delay between the UE and the TN target cell is 0. The network device determines or adjusts the third offset based on the terminal-specific timing advance TA reported by the terminal device in the connected mode, to ensure that when the propagation delay of the serving cell changes, an SSB of the TN target cell is always within an SMTC.

According to a fourth aspect, a communication method is provided. The method may be performed by a network device, or may be performed by a chip or a circuit configured in the network device, or may be performed by a logical module or software that can implement all or some functions of the network device. This is not limited in this application.

The method includes: The network device determines configuration information of a first measurement target, where the configuration information of the first measurement target indicates a first time window and a first offset, the first time window is associated with one or more target cells, and the first offset is a time domain position of the first time window based on a timing reference of a first serving cell; and the network device sends the configuration information of the first measurement target, where the configuration information of the first measurement target is used by a terminal device to measure the first measurement target in the first time window.

In this solution, if a serving cell has timing information of a to-be-measured target cell, the network device may configure the first offset of the first time window for the terminal device to measure the first measurement target.

With reference to the fourth aspect, in a possible implementation, the network device sends third indication information, where the third indication information indicates an identifier of a second cell, the identifier of the second cell is used by the terminal device to determine a second offset, and the second offset is used to adjust the first offset.

For the technical effects, refer to the first aspect. Details are not described again.

With reference to the fourth aspect, in a possible implementation, the network device sends fourth indication information, where the fourth indication information indicates an identifier of a second ephemeris, and the identifier of the second ephemeris is used by the terminal device to determine a second offset.

For the technical effects, refer to the first aspect. Details are not described again.

According to a fifth aspect, a communication method is provided. The method may be performed by a network device, or may be performed by a chip or a circuit configured in the network device, or may be performed by a logical module or software that can implement all or some functions of the network device. This is not limited in this application.

The method includes: The network device determines a third offset, where the third offset is used by a terminal device to measure a first measurement target in a second time window in a connected mode, and the third offset is a time domain position of the second time window based on a timing reference of a first serving cell.

When the first measurement target is a terrestrial network TN frequency, the network device adjusts the third offset based on a terminal-specific timing advance TA reported by the terminal device.

In this solution, in the connected mode, the network may adjust an SMTC offset based on the UE-specific TA.

According to a sixth aspect, a communication apparatus is provided. For beneficial effects, refer to the descriptions in the first aspect. Details are not described herein again. The communication apparatus has a function of implementing the behavior in the method example in the first aspect. The function may be implemented by using hardware, or may be implemented by using hardware executing corresponding software. The hardware or the software includes one or more modules corresponding to the foregoing function. In a possible design, the communication apparatus includes: a transceiver module, configured to receive configuration information of a first measurement target, where the configuration information of the first measurement target indicates a first time window, and the first time window is associated with one or more target cells; and a processing module, configured to determine a first offset of the first time window, where the first offset is a time domain position of the first time window based on a timing reference of a first serving cell; and measure the first measurement target in the first time window. These modules may perform corresponding functions in the method example in the first aspect. For details, refer to the detailed descriptions in the method example. Details are not described herein again.

According to a seventh aspect, a communication apparatus is provided. For beneficial effects, refer to the descriptions in the second aspect. Details are not described herein again. The communication apparatus has a function of implementing the behavior in the method example in the second aspect. The function may be implemented by using hardware, or may be implemented by using hardware executing corresponding software. The hardware or the software includes one or more modules corresponding to the foregoing function. In a possible design, the communication apparatus includes: a transceiver module, configured to receive configuration information of a first measurement target, where the configuration information of the first measurement target indicates a first time window and a first offset, the first time window is associated with one or more target cells, and the first offset is a time domain position of the first time window based on a timing reference of a first serving cell; and a processing module, configured to measure the first measurement target in the first time window. These modules may perform corresponding functions in the method example in the second aspect. For details, refer to the detailed descriptions in the method example. Details are not described herein again.

According to an eighth aspect, a communication apparatus is provided. For beneficial effects, refer to the descriptions in the third aspect. Details are not described herein again. The communication apparatus has a function of implementing the behavior in the method example in the third aspect. The function may be implemented by using hardware, or may be implemented by using hardware executing corresponding software. The hardware or the software includes one or more modules corresponding to the foregoing function. In a possible design, the communication apparatus includes: a processing module, configured to determine configuration information of a first measurement target, where the configuration information of the first measurement target indicates a first time window, the first time window is associated with one or more target cells, the configuration information of the first measurement target does not indicate a first offset, and the first offset is a time domain position of the first time window based on a timing reference of a first serving cell; and a transceiver module, configured to send the configuration information of the first measurement target, where the configuration information of the first measurement target is used by a terminal device to measure the first measurement target in the first time window. These modules may perform corresponding functions in the method example in the third aspect. For details, refer to the detailed descriptions in the method example. Details are not described herein again.

According to a ninth aspect, a communication apparatus is provided. For beneficial effects, refer to the descriptions in the fourth aspect. Details are not described herein again. The communication apparatus has a function of implementing the behavior in the method example in the fourth aspect. The function may be implemented by using hardware, or may be implemented by using hardware executing corresponding software. The hardware or the software includes one or more modules corresponding to the foregoing function. In a possible design, the communication apparatus includes: a processing module, configured to determine configuration information of a first measurement target, where the configuration information of the first measurement target indicates a first time window and a first offset, the first time window is associated with one or more target cells, and the first offset is a time domain position of the first time window based on a timing reference of a first serving cell; and a transceiver module, configured to send the configuration information of the first measurement target, where the configuration information of the first measurement target is used by a terminal device to measure the first measurement target in the first time window. These modules may perform corresponding functions in the method example in the fourth aspect. For details, refer to the detailed descriptions in the method example. Details are not described herein again.

According to a tenth aspect, a communication apparatus is provided. For beneficial effects, refer to the descriptions in the fifth aspect. Details are not described herein again. The communication apparatus has a function of implementing the behavior in the method example in the fifth aspect. The function may be implemented by using hardware, or may be implemented by using hardware executing corresponding software. The hardware or the software includes one or more modules corresponding to the foregoing function. In a possible design, the communication apparatus includes: a processing module, configured to determine a third offset, where the third offset is used by a terminal device to measure a first measurement target in a second time window in a connected mode, the third offset is a time domain position of the second time window based on a timing reference of a first serving cell, and when the first measurement target is a terrestrial network TN frequency, the network device adjusts the third offset based on a terminal-specific timing advance TA reported by the terminal device; and a storage module, configured to store a computer program and instructions. These modules may perform corresponding functions in the method example in the fifth aspect. For details, refer to the detailed descriptions in the method example. Details are not described herein again.

According to an eleventh aspect, a communication apparatus is provided. The communication apparatus may be the terminal device in the foregoing method embodiments, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a twelfth aspect, a communication apparatus is provided. The communication apparatus may be the network device in the foregoing method embodiments, or may be a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a thirteenth aspect, this application provides a computer-readable medium. The computer-readable storage medium stores a computer program or instructions, and when the computer program or the instructions are run on a computer, the computer is enabled to implement the method according to any one of the first aspect to the fifth aspect and the possible implementations of the first aspect to the fifth aspect.

According to a fourteenth aspect, this application provides a computer program product, including a computer program or instructions. When being executed, the computer program or the instructions are used to implement the method according to any one of the first aspect to the fifth aspect or the possible implementations of the first aspect to the fifth aspect.

According to a fifteenth aspect, this application provides a chip system, including a processor. The processor is configured to execute a computer program or instructions in a memory, so that the chip system implements the method according to any one of the first aspect to the fifth aspect or the possible implementations of the first aspect to the fifth aspect.

According to a sixteenth aspect, a communication apparatus is provided. The apparatus includes a processor, and the processor is configured to perform the method according to any one of the first aspect to the fifth aspect and the possible implementations of the first aspect to the fifth aspect.

For beneficial effects in the sixth aspect to the sixteenth aspect and the possible implementations of any one of the aspects, refer to the beneficial effects in the first aspect and the possible implementations of the first aspect.

### BRIEF DESCRIPTION OF DRAWINGS

FIG. 1 is a diagram of a network architecture applicable to an embodiment of this application;
FIG. 2 is a diagram of an architecture of a communication system applicable to an embodiment of this application;
FIG. 3 is a diagram of an architecture of a communication system applicable to an embodiment of this application;
FIG. 4 is a diagram of an architecture of a communication system applicable to an embodiment of this application;
FIG. 5 is a diagram of an architecture of a communication system applicable to an embodiment of this application;
FIG. 6 is a diagram of an architecture of a communication system applicable to an embodiment of this application;
FIG. 7 is a schematic flowchart of a communication method applicable to an embodiment of this application;
FIG. 8 is a diagram of interaction of a communication method applicable to an embodiment of this application;
FIG. 9 is a diagram of interaction of another communication method applicable to an embodiment of this application;
FIG. 10 is a block diagram of a communication apparatus applicable to an embodiment of this application;
FIG. 11 is a block diagram of a structure of a communication apparatus applicable to an embodiment of this application; and
FIG. 12 is a block diagram of a structure of a communication apparatus applicable to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, or another evolved communication system.

The technical solutions provided in this application may be further applied to a future communication system, for example, a 6th generation mobile communication system. This is not limited in this application.

The technical solutions provided in this application may be further applied to a communication scenario in an industrial field. This is not limited in this application.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

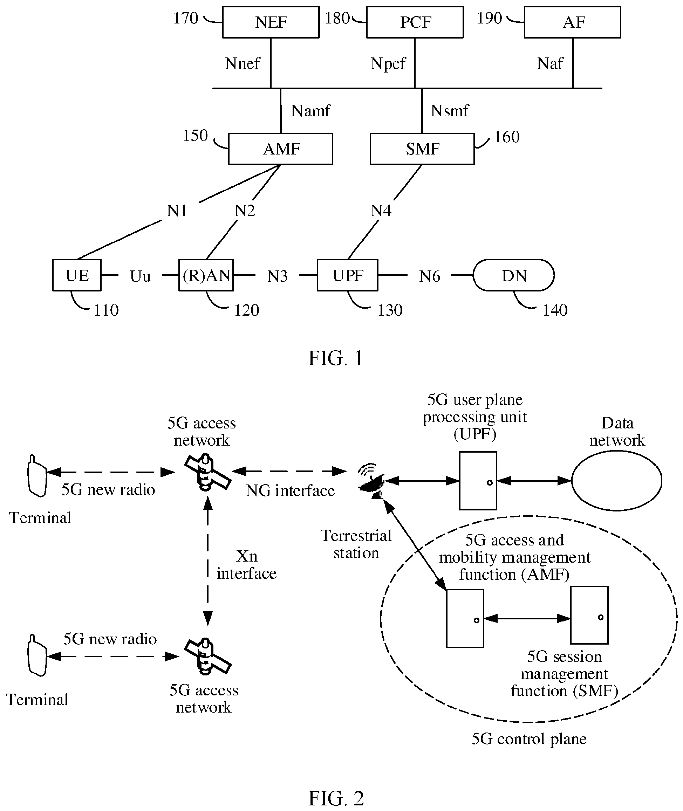

FIG. 1 is a diagram of a network architecture applicable to an embodiment of this application. As shown in FIG. 1, the network architecture may include user equipment 110, a (radio) access network device 120, a user plane network element 130, a data network 140, an access management network element 150, a session management network element 160, a network exposure network element 170, a policy control network element 180, an application network element 190, and the like. The following separately describes the network elements in the network architecture.
1. User equipment (user equipment, UE) 110: The user equipment may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer with wireless sending and receiving functions, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

2. (Radio) access network (radio access network, (R)AN) device 120: The access network device may also be referred to as an access device. The (R)AN can manage a radio resource, provide an access service for user equipment, and complete forwarding of data of the user equipment between the user equipment and a core network. The (R)AN may also be understood as a base station in a network.

For example, the access network device in embodiments of this application may be any communication device with wireless sending and receiving functions for communicating with user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseBand unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB or a transmission point (TRP or TP) in a 5G system such as an NR system, or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU). It may be understood that all or some functions of the access network device in this application may alternatively be implemented by using a software function running on hardware, or may be implemented by using an instantiated virtualization function on a platform (for example, a cloud platform).

In some deployments, in a network structure, the access network device may include a central unit (centralized unit, CU) node, a distributed unit (distributed unit, DU) node, or a RAN device including a CU node and a DU node. The RAN device including the CU node and the DU node separates protocol layers of a gNB in an NR system. Functions of some protocol layers are controlled by the CU in a centralized manner. Functions of some or all remaining protocol layers are distributed in the DU, and the CU controls the DU in a centralized manner. In an implementation, a radio resource control (radio Resource Control, RRC) layer, a PDCP layer, and a service data adaptation protocol (service data adaptation protocol, SDAP) layer in a protocol stack are deployed in the CU. A radio link control (radio link control, RLC) layer, a media access control (media access control, MAC) layer, and a physical layer (physical layer, PHY) in the protocol stack are deployed in the DU. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. In other words, there may be another function division manner between the CU and the DU. Details are not described in embodiments of this application. Functions of the CU may be implemented by one entity or different entities. For example, the functions of the CU may be further divided. For example, a control plane (CP) and a user plane (UP) are separated, that is, a CU control plane (CU-CP) and a CU user plane (CU-UP) are separated. For example, the CU-CP and the CU-UP may be implemented by different function entities, and the CU-CP and the CU-UP may be coupled to the DU, to jointly implement a function of a base station. The CU control plane CU-CP further includes a further split architecture, that is, the existing CU-CP is further split into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer). This is not limited in this application.

3. User plane network element 130: serves as an interface to a data network, and implements functions such as user plane data forwarding, session/flow-level charging statistics collection, and bandwidth throttling, that is, packet routing and forwarding, quality of service (quality of service, QoS) handling of user plane data, and the like.

In a long term evolution (long term evolution, LTE) communication system, the user plane network element may be a serving gateway user plane (serving gateway user plane, SGW-U), a packet data network gateway user plane (packet data network gateway user plane, PGW-U), or a network element in which an SGW-U and a PGW-U are integrated. In a 5G communication system, the user plane network element may be a user plane function (user plane function, UPF) network element.

4. Data network 140: provides, for example, an operator service, an internet access service, or a third-party service, and includes a server, where the server implements video source encoding, rendering, and the like.

In a 5G communication system, the data network may be a data network (data network, DN).

5. Access management network element 150: is mainly used for mobility management, access management, and the like, and may be configured to implement another function in mobility management entity (mobility management entity, MME) functions other than session management, for example, functions such as lawful interception and access authorization/authentication.

In an LTE communication system, the access management network element may be an MME network element. In a 5G communication system, the access management network element may be an access and mobility management function (access and mobility management function, AMF), and mainly performs functions such as mobility management and access authentication/authorization. In addition, the access management network element is further responsible for transferring a user policy between a terminal and a policy control function (policy control function, PCF) network element.

6. Session management network element 160: is mainly configured to: manage a session, allocate and manage an internet protocol (internet protocol, IP) address of user equipment, select an endpoint that can manage a user plane function interface and a policy control and charging function interface, perform downlink data notification, and the like.

In an LTE communication system, the session management network element may be a serving gateway control plane (serving gateway control plane, SGW-C), a packet data network gateway control plane (packet data network gateway control plane, PGW-C), or a network element in which an SGW-C and a PGW-C are integrated. In a 5G communication system, the session management network element may be a session management function (session management function, SMF) network element, and completes terminal IP address allocation, UPF selection, charging and QoS policy control, and the like.
7. Network exposure network element 170: In an LTE communication system, the network exposure network element may be a service capability exposure function (service capability exposure function, SCEF) network element. In a 5G communication system, the network exposure network element may be a network exposure function (network element function, NEF) network element, is mainly configured to expose a service and a capability of a 3GPP network function to an AF, and may further enable the AF to provide information for the 3GPP network function.
8. Policy control network element 180: includes a user subscription data management function, a policy control function, a charging policy control function, quality of service (quality of service, QoS) control, and the like, is a unified policy framework used to govern network behavior, and provides policy rule information and the like for a control plane function network element (for example, an AMF network element or an SMF network element).

In an LTE communication system, the policy control network element may be a policy control and charging function (policy control and charging function, PCRF). In a 5G communication system, the policy control network element may be a PCF.

In a 5G communication system, the application network element may be a network slice selection function (network slice selection function, NSSF) network element.

9. Application network element 190: In a 5G communication system, the application network element may be an application function (application function, AF) network element, represents an application function of a third party or an operator, is an interface for a 5G network to obtain external application data, and is mainly configured to transfer a requirement of an application side for a network side.

In a future communication system, for example, a 6G communication system, the foregoing network element or device may still use a name of the network element or device in a 4G or 5G communication system, or may have another name. This is not limited in embodiments of this application. Functions of the network elements or devices may be implemented by one independent network element, or may be jointly implemented by several network elements. During actual deployment, network elements in a core network may be deployed on a same physical device or different physical devices. For example, in a possible deployment, an AMF and an SMF may be deployed on a same physical device. For another example, a network element in a 5G core network and a network element in a 4G core network may be deployed on a same physical device. This is not limited in embodiments of this application.

It may be understood that FIG. 1 is merely an example, and does not constitute any limitation on the protection scope of this application. The communication method provided in embodiments of this application may further relate to a network element that is not shown in FIG. 1. Certainly, the communication method provided in embodiments of this application may alternatively include only some network elements shown in FIG. 1.

In the network architecture shown in FIG. 1, the terminal is connected to the AMF through an N1 interface, the (R)AN is connected to the AMF through an N2 interface, and the (R)AN is connected to the UPF through an N3 interface. UPFs are connected to each other through an N9 interface, and the UPF is connected to the DN through an N6 interface. The SMF controls the UPF through an N4 interface.

It may be understood that the network architecture used in embodiments of this application is merely an example for description, and a network architecture applicable to embodiments of this application is not limited thereto. Any network architecture that can implement functions of the foregoing network elements is applicable to embodiments of this application.

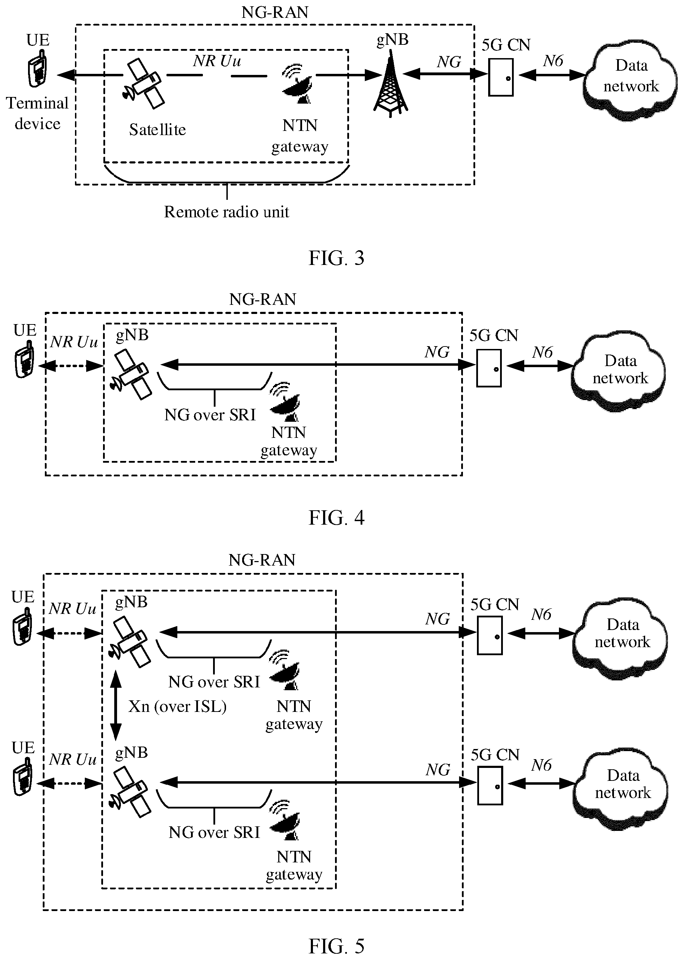

FIG. 2 shows a network application architecture of the technology. A terrestrial mobile terminal UE accesses a network through 5G new radio. A 5G access network device is deployed on a satellite, and is connected to a terrestrial core network through a radio link. In addition, there is a radio link between satellites, to implement signaling exchange and user data transmission between access network devices. Network elements in FIG. 3 and interfaces of the network elements are described as follows:
Terminal device: is a mobile device that supports 5G new radio, for example, a mobile phone or a pad. The terminal device may access a satellite network through an air interface and initiate services such as call and internet access.

5G access network device: mainly provides a radio access service, schedules a radio resource for an access terminal, provides a reliable wireless transmission protocol and data encryption protocol, and the like, and is, for example, a base station.

5G core network: provides services such as user access control, mobility management, session management, user security authentication, and charging. The 5G core network includes a plurality of functional units, which can be classified into control-plane and data-plane functional entities. An access and mobility management unit (AMF) is responsible for user access management, security authentication, and mobility management. A user plane unit (UPF) is responsible for managing functions such as user plane data transmission and traffic statistics collection.

Terrestrial station: is responsible for forwarding signaling and service data between a satellite access network device and a 5G core network.

5G new radio: is a radio link between a terminal and an access network device.

Xn interface: is an interface between 5G access network devices, and is mainly used for signaling exchange such as handover.

NG interface: is an interface between an 5G access network device and a 5G core network, and is mainly for exchanging signaling such as NAS signaling of the core network and service data of a user.

In a non-terrestrial network (NTN), a plurality of NTN-based RAN architectures (NTN-based NG-RAN architectures) are defined. The following uses an example to describe the RAN architecture applicable to the NTN.

FIG. 3 is a diagram of an architecture of a communication system applicable to an embodiment of this application. A name of the architecture shown in FIG. 3 is RAN architecture with transparent satellite (RAN architecture with transparent satellite). As shown in FIG. 3, in a transparent (transparent) transmission scenario, a satellite is used to implement frequency conversion and radio frequency amplification, and is equivalent to an analog radio frequency repeater. Therefore, the satellite replicates an NR Uu radio interface signal from a feeder link feeder link (between an NTN gateway and the satellite) to a service link service link (between the satellite and UE), and vice versa. A satellite radio interface SRI (Satellite Radio Interface) on the feeder link transmits an NR-Uu interface signal, that is, the satellite does not terminate the NR-Uu interface signal, but replicates the signal. The NTN gateway supports all necessary functions for forwarding the NR-Uu interface signal. Different transmission satellites can be connected to a same terrestrial gNB.

FIG. 4 is a diagram of another architecture of a communication system applicable to an embodiment of this application. A name of the architecture shown in FIG. 4 is regenerative satellite without inter-satellite link (Regenerative satellite without ISL (inter-satellite link, inter-satellite link)). In this architecture, a satellite serves as a base station to regenerate a signal received from the ground. To be specific, an NR-Uu radio interface signal is transmitted on a service link between UE and the satellite, and a satellite radio interface (SRI) signal is transmitted on a feeder link between an NTN gateway and the satellite. An SRI interface is a transmission link between the NTN gateway and the satellite. An NG interface signal is transmitted to the NTN gateway through the SRI interface, and then forwarded by the NTN gateway to a terrestrial core network device. A process of transmitting an NG interface signal from the terrestrial core network device to the satellite base station is similar, and details are not described herein again.

FIG. 5 is a diagram of another architecture of a communication system applicable to an embodiment of this application. A name of the architecture shown in FIG. 4 is regenerative satellite with inter-satellite link (Regenerative satellite with ISL). In this scenario, a satellite also serves as a base station. A difference for the previous scenario is that an ISL exists in this scenario. The ISL is a transmission link between satellites. As shown in the foregoing figure, UE served by a base station on a satellite can access a 5G core network through an ISL. Base stations on different satellites can be connected to a same terrestrial 5G core network.

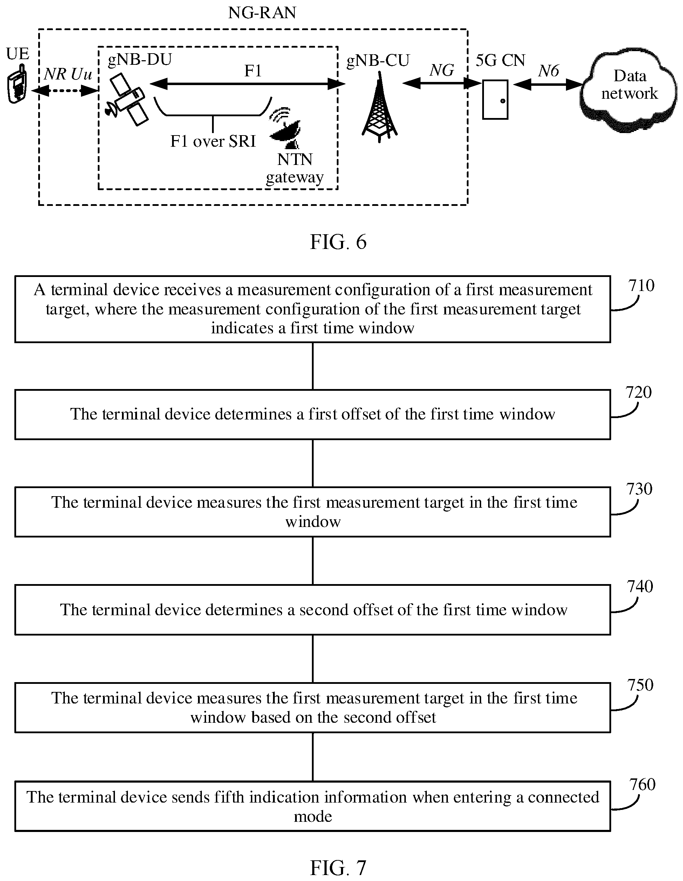

FIG. 6 is a diagram of another architecture of a communication system applicable to an embodiment of this application. A name of the architecture shown in FIG. 4 is NG-RAN with a regenerative satellite based on gNB-DU (NG-RAN with a regenerative satellite based on gNB-DU). In this scenario, a CU and a DU of a base station are separated. A satellite serves as the DU of the base station on the satellite. The satellite regenerates a signal received from the ground. To be specific, an NR-Uu radio interface signal is transmitted on a service link between UE and the satellite, and a satellite radio interface (SRI) signal is transmitted on a feeder link between an NTN gateway and the satellite. The satellite radio interface is a transmission link, and can transmit a logical interface F1 signal in compliance with the 3GPP standard. An F1 protocol signal is transmitted over the satellite radio interface. The satellite can provide an inter-satellite link ISL between satellites. The NTN gateway is a node at a transport network layer and supports all necessary transport protocols. DUs on different satellites can be connected to a same terrestrial CU.

It should be noted that the foregoing RAN architecture is merely an example for description, and may be further used in another NTN architecture, or in 4G, 5G, or a future wireless network architecture. This is not limited in embodiments of this application.

Measurement in NR is based on a synchronization signal block measurement timing configuration (SSB measurement timing configuration, SMTC). For example, when configuring a terminal to measure a specific frequency, a network configures an SMTC of the frequency. The terminal determines, based on the SMTC, a window that periodically occurs. During measurement, the terminal performs search in only the SMTC window and measures only a synchronization signal block (Synchronization Signal and PBCH block, SSB) in the SMTC window. Therefore, when configuring the SMTC, the network needs to ensure that SSBs at all frequencies fall within the SMTC window at the frequency. An SMTC offset is determined based on a timing of a serving cell. In a TN scenario, propagation delays (propagation delay, PD) of the serving cell and a neighboring cell are nearly the same. Therefore, user equipment UE can directly use the SMTC offset for measurement.

However, in an NTN scenario, a propagation delay from the serving cell to the UE is different from a propagation delay from the neighboring cell to the UE, and varies with time in a LEO scenario. Therefore, the SMTC configured by the network cannot be directly used.

In the conventional technology, it is assumed that an NTN neighboring cell has timing information of a to-be-measured neighboring cell. Therefore, an SMTC offset may be configured for a to-be-measured frequency. However, actually, a serving cell of a terminal device may not have timing information of a target cell, or target cell timings of different terminal devices in a coverage area of a serving cell are different. In this case, the serving cell cannot configure an independent SMTC offset for each terminal device.

In view of this, embodiments of this application provide a communication solution. A terminal device may determine an SMTC offset and measure a measurement target.

The following describes in detail the solution of this application.

FIG. 7 is a schematic flowchart of a communication method according to this application.

S710: A network device sends configuration information of a first measurement target to a terminal device.

The network device sends the configuration information of the first measurement target to the terminal device. Correspondingly, the terminal device receives the configuration information of the first measurement target from the network device.

The first measurement target may be a target frequency to be measured by the terminal device, or may be a target band to be measured by the terminal device.

In this application, the configuration information of the first measurement target indicates a first time window, and the first time window is associated with one or more target cells.

The one or more target cells associated with the first time window may be indicated by the network device in the configuration information. For example, the network device indicates, in the configuration information, a list of cells associated with the first time window. Alternatively, the one or more target cells may be determined according to a predefined rule. For example, if the network device does not indicate, in the configuration information, a list of cells associated with the first time window, the terminal device determines that all target cells that are not associated with a specific measurement window are target cells associated with the first time window. How to determine the one or more target cells associated with the first time window is not limited in this application.

The configuration information that is of the first measurement target and that is sent by the network device may indicate one or more time windows, and each time window corresponds to a different target cell on the first measurement target.

In this application, the first time window may be a synchronization signal block measurement timing configuration (synchronization signal and PBCH block, SMTC).

In an optional understanding, the first measurement target is a first frequency, and the terminal device may perform search in a first SMTC window corresponding to the first frequency, and may measure all synchronization signal blocks (synchronization signal and PBCH block, SSB) of a target cell at the first frequency that fall within the first SMTC window.

Configuration information of the first time window may include a period and duration of the SMTC.

In a possible implementation, the configuration information of the first time window may further include a first offset (offset).

The first offset is a time domain position of the first time window based on a timing reference of a first serving cell. For example, the first offset may be a time domain offset relative to a start location of a 0th frame of the serving cell.

It may be understood that the network device may configure the first offset of the first time window for the terminal device.

In a possible implementation, if the network device does not configure the first offset for the terminal device, the terminal device may autonomously determine the first offset.

In this application, one or more target cells associated with each time window may be neighboring cells (non-serving cells), or may be serving cells. This is not limited in this application.

In this application, the network device may send the configuration information of the first measurement target by using a system message.

In the foregoing technical solution, if a serving cell has timing information of a to-be-measured target cell, the network device may configure the first offset of the first time window; or if a serving cell does not have timing information of a to-be-measured target cell, or target cell timings corresponding to different terminal devices in a coverage area of a serving cell are different, the network device may not configure the first offset of the first time window.

S720: The terminal device determines the first offset of the first time window.

In a possible implementation, the terminal determines the first offset of the first time window by using the configuration information of the first measurement target. To be specific, the configuration information of the first measurement target indicates the first time window and the first offset of the first time window. In other words, the network device configures the first offset of the first time window.

In this case, the terminal device may directly obtain the first offset of the first time window based on the configuration information.

In a possible implementation, the terminal device may autonomously determine the first offset of the first time window. To be specific, the configuration information of the first measurement target indicates the first time window, but does not indicate the first offset of the first time window. In other words, the network device does not configure the first offset of the first time window.

In this case, the terminal device may autonomously determine the first offset of the first time window.

Specifically, the terminal device determines the first offset by using locations of SSBs of the one or more target cells associated with the first time window.

For example, the terminal device determines the first offset by using blindly found locations of the SSBs of the one or more target cells associated with the first time window.

For example, IDs of the target cells associated with the first time window may be configured in a serving cell, and the terminal device determines a location of an SSB of the target cell by blindly searching for the IDs of the one or more target cells, to further determine the first offset.

For another example, IDs of the target cells associated with the first time window are not configured in a serving cell, and the terminal device may autonomously determine a location of an SSB of a specific neighboring cell to determine the first offset of the first time window. For example, the terminal device may determine the first offset of the first time window based on a location of an SSB of a first found neighboring cell. This is not limited in embodiments of this application.

In the foregoing technical solution, when the network device does not configure the first offset of the first time window, the terminal device performs blind search on a target frequency, and autonomously determines the first offset of the first time window, to perform measurement. When the serving cell does not have timing information of the to-be-measured target cell, or target cell timings learned by different terminals in a coverage area of the serving cell are different, measurement on the first measurement target is enabled.

For example, a TN and an NTN may be networks of different operators, and an NTN serving cell may not know timing information of a TN neighboring cell, or TN neighboring cell timings learned by different terminals in a coverage area of an NTN cell are different. Therefore, an SMTC offset that can be used to measure a TN neighboring cell cannot be configured for all UEs in an idle/inactive mode in the serving cell.

In a possible implementation, the terminal device determines a first cell from the one or more target cells associated with the first time window, and determines the first offset based on a location of an SSB of the first cell.

The terminal device may receive first indication information from the network device, where the first indication information indicates an identifier of the first cell.

Alternatively, when the first measurement target is an NTN frequency, the terminal device may receive second indication information from the network device, where the second indication information indicates an identifier of a first ephemeris, and the terminal device determines the first offset based on the identifier of the first ephemeris.

For example, the terminal device determines, based on the identifier of the first ephemeris, an identifier of the first cell corresponding to the first ephemeris. To be specific, when finding the first cell corresponding to the first ephemeris, the terminal determines the first offset based on a location of an SSB of the cell.

For another example, the terminal device directly determines the first offset based on the identifier of the first ephemeris.

In the foregoing technical solution, the network may indicate a reference cell or a reference ephemeris associated with a specific SMTC to the terminal. When one SMTC is associated with a plurality of to-be-measured neighboring cells, the terminal may determine the first offset based on a neighboring cell corresponding to the reference cell or the reference ephemeris, so that behavior of determining an SMTC offset by the terminal is clarified. For example, the network may set a neighboring cell or a satellite with a relatively high priority as a reference, to ensure that the neighboring cell or the satellite can be measured by the terminal (an SSB of the neighboring cell or the satellite is within an SMTC determined or adjusted by the terminal).

S730: The terminal device measures the first measurement target in the first time window.

The terminal device measures the first measurement target in the first time window based on the first offset.

S740: The terminal device determines a second offset of the first time window.

Further, after the terminal device measures the first measurement target based on the determined first offset, the terminal device needs to adjust the first offset (based on the second offset).

It should be understood that, regardless of the first offset indicated by the network device or the first offset autonomously determined by the terminal device, adjustment may need to be performed during measurement because a propagation delay from the terminal device to the serving cell and/or a propagation delay from the terminal device to the target cell change/changes.

The following describes a method for adjusting the first offset to obtain the second offset.

In a possible implementation, the terminal device determines the second offset based on a propagation delay difference between the first serving cell and the one or more target cells associated with the first time window, where the propagation delay difference is a difference between a first delay and a second delay, the first delay is a propagation delay between a network device to which the one or more target cells belong and the terminal device, and the second delay is a propagation delay between a network device to which the first serving cell belongs and the terminal device.

For example, the terminal device determines a second cell from the one or more target cells associated with the first time window; and the terminal device determines the second offset based on a propagation delay difference between the second cell and the first serving cell.

The terminal device may receive third indication information from the network device, where the third indication information indicates an identifier of the second cell.

Alternatively, when a to-be-measured frequency is an NTN frequency, the terminal device may receive fourth indication information from the network device, where the fourth indication information indicates an identifier of a second ephemeris, and the terminal device determines the second offset based on the identifier of the second ephemeris.

For example, the terminal device determines, based on the identifier of the second ephemeris, an identifier of the second cell corresponding to the second ephemeris. To be specific, when the terminal finds a cell corresponding to a reference ephemeris, the terminal determines the second offset based on a propagation delay difference between the cell and the first serving cell.

For another example, the terminal device directly determines the second offset based on the identifier of the second ephemeris.

Optionally, the network device may alternatively indicate a distance between an SSB of each to-be-measured target cell (or an SSB corresponding to each ephemeris) and a first time window header. The terminal determines an adjustment value for the first offset based on distances between SSBs of a plurality of target cells and the first time window header, to determine the second offset.

Optionally, for the first offset configured by the network device, it is assumed that UE is at a reference location of a cell. The reference location is a reference location of an NTN cell, for example, a central location of a cell coverage area.

In a possible implementation, the first measurement target is a TN frequency, and the terminal device determines the second offset based on a propagation delay difference between the first serving cell and the one or more target cells associated with the first time window, where a real PD of the one or more target cells associated with the first time window is assumed to be 0.

Specifically, the terminal device determines a first propagation delay difference corresponding to the first time window; the terminal device determines a second propagation delay difference, at a measurement moment, between the first serving cell and the one or more target cells associated with the first time window; and a difference between the first propagation delay difference and the second propagation delay difference may be used as the second offset.

There are two cases in which the terminal device determines the first propagation delay difference corresponding to the first time window.

Case 1: The configuration information of the first measurement target indicates the first offset, and the terminal device determines, based on an indication of the network device or a predefined value, the first propagation delay difference corresponding to the first time window.

For example, a standard predefines that the first propagation delay difference is X milliseconds, that is, when the first offset is configured through the serving cell, it is assumed that the difference between the second propagation delay difference and the first propagation delay difference is X millimeters. For example, X=0. In another possible implementation, a value of the first propagation delay difference is indicated when the first offset is configured through the serving cell.

Case 2: The configuration information of the first measurement target indicates the first time window (excluding the first offset), and the terminal device determines that a real value, at a first moment, of the propagation delay difference between the first serving cell and the one or more target cells associated with the first time window is the first propagation delay difference corresponding to the first time window. The first moment may be a moment at which the terminal device determines the first offset.

There are also two cases in which the terminal device determines the second propagation delay difference, at the measurement moment, between the first serving cell and the one or more target cells associated with the first time window.

Case 1: The one or more target cells associated with the first time window are NTN cells, and the terminal device determines, based on location information of the terminal device, ephemeris information of the neighboring cell, and feed circuit propagation delay information indicated by the network device, a real propagation delay of the one or more target cells associated with the first time window.

Case 2: The one or more target cells associated with the first time window are TN cells, and the terminal device determines that a real propagation delay of the one or more target cells associated with the first time window is 0.

In a possible implementation, the first measurement target is a TN frequency, and the terminal device determines the second offset based on a propagation delay of the first serving cell.

In the foregoing technical solution, when the one or more target cells associated with the first time window are TN cells, the terminal device in the idle/inactive mode may adjust the first offset by using the second offset, to ensure that when the propagation delay of the serving cell changes, an SSB of the TN cell is always within the SMTC.

In the foregoing technical solution, the network device may indicate a reference cell or a reference ephemeris associated with a specific SMTC to the terminal device. When one SMTC is associated with a plurality of to-be-measured neighboring cells, the terminal may determine the second offset based on a neighboring cell corresponding to the reference cell or the reference ephemeris, so that behavior of adjusting an SMTC offset by the terminal is clarified. For example, the network device may set a neighboring cell or a satellite with a relatively high priority as a reference, to ensure that the neighboring cell or the satellite can be measured by the terminal (an SSB of the neighboring cell or the satellite is within an SMTC determined or adjusted by the terminal).

S750: The terminal device measures the first measurement target in the first time window based on the second offset.

After adjusting the first offset based on the second offset, the terminal device measures the first measurement target in the first time window.

S760: The terminal device sends fifth indication information to the network device when entering the connected mode.

In this application, the terminal device sends the fifth indication information to the network when entering the connected mode from the idle/inactive mode. The fifth indication information may be the first offset, or a sum of the first offset and the second offset, or a frame number and frame header timing difference SFTD. The SFTD indicates a frame number and frame header timing difference between the one or more target cells and the serving cell.

Correspondingly, the network device receives the fifth indication information, and determines, based on the fifth indication information, a third offset to be configured for the terminal device in the connected mode, where the third offset is used by the terminal device to measure the first measurement target in a second time window in the connected mode.

Further, in the connected mode, when the first measurement target is an NTN frequency, the network device adjusts the third offset based on a PDD reported by the terminal device; or when the first measurement target is a TN frequency, the network adjusts the third offset based on a terminal-specific timing advance (UE-specific TA) reported by the terminal.

According to the foregoing technical solution, the terminal device may determine the first offset corresponding to the first time window, and further adjust the first offset to obtain the second offset. Therefore, the first measurement target may be measured in the idle mode or the inactive mode, and a recommended value for an offset or an SFTD is reported to the network when the terminal device enters the connected mode from the idle/inactive mode, so that the network device determines or adjusts an offset in the connected mode, thereby measuring the first measurement target in the connected mode.

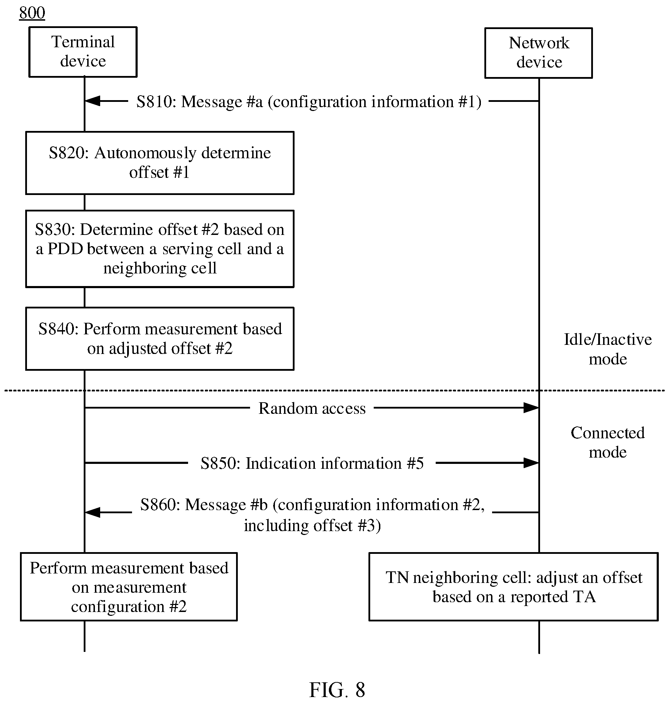

FIG. 8 is a diagram of interaction of a communication method according to this application.

In this embodiment, an example in which a terminal device and a network device are used as execution bodies of interaction illustration is used to illustrate the method. However, the execution bodies of the interaction illustration are not limited in this application. For example, the terminal device in FIG. 8 may alternatively be a chip, a chip system, or a processor that supports the terminal device in implementing the method, or may be a logical module or software that can implement all or some functions of the terminal device. The network device in FIG. 8 may alternatively be a chip, a chip system, or a processor that supports the network device in implementing the method, or may be a logical module or software that can implement all or some functions of the network device.

In this embodiment, for example, a first measurement target is frequency #1, a first time window is SMTC #1, a first offset is offset #1, a second offset is offset #2, and a third offset is offset #3. It may be understood that the following is merely an example for description.

S810: The network device sends message #a to the terminal device.

Correspondingly, the terminal device receives message #a from the network device.

Specifically, message #a includes configuration information #1 of frequency #1, and configuration information #1 may indicate SMTC #1 and a period and duration of SMTC #1.

In an optional understanding, configuration information #1 includes SMTC #1 and the period and the duration of SMTC #1, or the terminal device can obtain SMTC #1 and the period and the duration of SMTC #1 based on an indication of configuration information #1.

SMTC #1 is associated with one or more target cells. The one or more target cells may be indicated by the network device in configuration information.

For example, message #a may be a system message.

S820: The terminal device determines offset #1.

If configuration information #1 does not indicate offset #1, the terminal device may autonomously determine offset #1.

The following specifically describes a solution in which the terminal device autonomously determines offset #1.

Specifically, the terminal device may determine offset #1 by using locations of SSBs of the one or more target cells associated with SMTC #1.

For example, the terminal device determines offset #1 by using blindly found locations of the SSBs of the one or more target cells associated with SMTC #1.

For example, the terminal device determines cell #1 from the one or more target cells associated with SMTC #1, and determines offset #1 based on a location of an SSB of cell #1.

The terminal device may determine cell #1 based on indication information of the network device.

For example, the terminal device may receive indication information #1 from the network device, where indication information #1 indicates an ID of cell #1.

For another example, the terminal device may receive indication information #2 from the network device, where indication information #2 indicates an ID of ephemeris #1.

Specifically, the terminal device may determine, based on the ID of ephemeris #1, cell #1 corresponding to ephemeris #1.

Alternatively, the terminal device may directly determine cell #1 based on the ID of ephemeris #1.

It should be understood that when frequency #1 is an NTN frequency, the terminal device may receive indication information #2 from the network device.

S830: The terminal device determines offset #2.

After the terminal device measures frequency #1 by using offset #1, the terminal device adjusts offset #1 by using offset #2.

When frequency #1 is a TN frequency, the terminal device determines offset #2 based on a propagation delay of a serving cell, or the terminal device determines offset #2 based on a propagation delay difference between a serving cell and a neighboring cell.

In an example, when the terminal device autonomously determines offset #1, the terminal device determines offset #2 based on the propagation delay difference between the serving cell and the neighboring cell.
a. The terminal device determines an assumed propagation delay difference (PDD-a) corresponding to SMTC #1.

To be specific, when the terminal device determines offset #1 at a first moment, a real PDD between the serving cell and one or more neighboring cells associated with the first SMTC is the assumed propagation delay difference (PDD-a).

If the target cell is a TN cell, the terminal determines that a real PD of the target cell is 0.

b. The terminal device determines a real propagation delay difference (PDD-r), at a measurement moment, between the serving cell and the one or more target cells associated with SMTC #1.

If the target cell is a TN cell, the terminal determines that a real PD of the target cell is 0.

c. The terminal device determines that an adjustment value of offset #1 is (PDD-r-PDD-a).

S840: The terminal device performs measurement based on offset #2.

S850: When the terminal device enters an active mode from an idle mode or an inactive mode, the terminal device sends indication information #5 to the network device.

Indication information #5 may indicate offset #1, or a sum of offset #1 and offset #2, or an SFTD.

S860: The network device sends message #b (configuration information #2) to the terminal device based on indication information #5.

Specifically, message #b includes configuration information #2, and configuration information #2 indicates SMTC #2 and offset #3.

Specifically, the network device determines, based on indication information #5, offset #3 configured for the terminal device in a connected mode, where offset #3 is used by the terminal device to measure frequency #1 in SMTC #2 in the connected mode.

Further, the terminal device measures frequency #1 based on configuration information #2.

Further, in the connected mode, when frequency #a is a TN frequency, the network determines offset #3 based on a UE-specific TA reported by the terminal, where offset #3 is used to adjust offset #2.

According to the foregoing technical solution, when the network device does not configure the first offset of the first time window, the terminal device performs blind search on a target frequency, and autonomously determines the first offset of the first time window, to perform measurement. When the serving cell does not have timing information of the to-be-measured target cell, or target cell timings learned by different terminals in a coverage area of the serving cell are different, measurement on the first measurement target is enabled. When the one or more target cells associated with the first time window are TN cells, the terminal device in the idle/inactive mode may adjust the first offset by using the second offset, to ensure that when the propagation delay of the serving cell changes, an SSB of the TN cell is always within the SMTC. Therefore, the first measurement target may be measured in the idle mode or the inactive mode, and a recommended value for an offset or an SFTD is reported to the network when the terminal device enters the connected mode from the idle/inactive mode, so that the network device determines or adjusts an offset in the connected mode, thereby measuring the first measurement target in the connected mode.

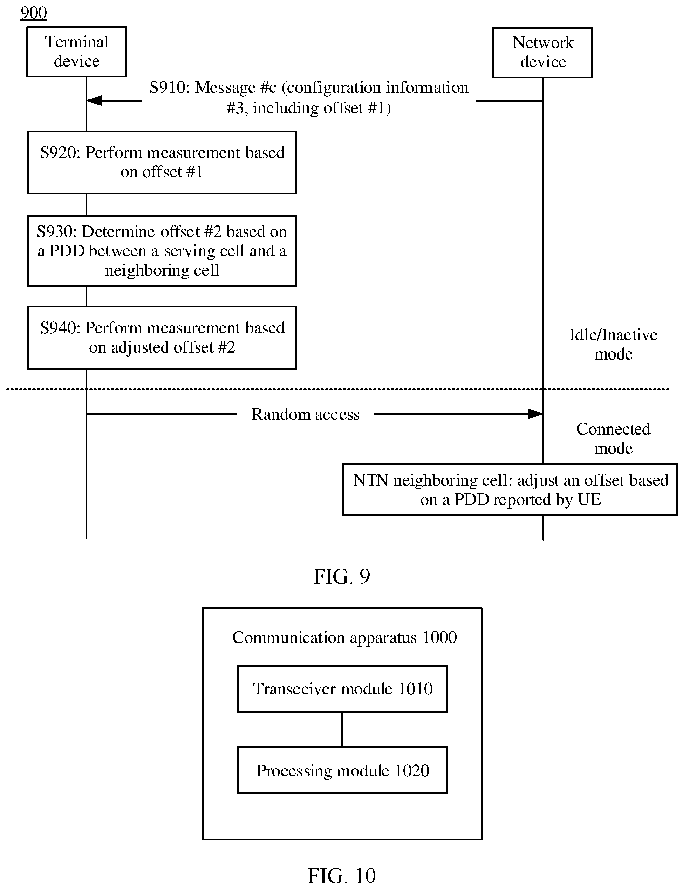

FIG. 9 is a diagram of interaction of a communication method according to this application.

In this embodiment, an example in which a terminal device and a network device are used as execution bodies of interaction illustration is used to illustrate the method. However, the execution bodies of the interaction illustration are not limited in this application. For example, the terminal device in FIG. 9 may alternatively be a chip, a chip system, or a processor that supports the terminal device in implementing the method, or may be a logical module or software that can implement all or some functions of the terminal device. The network device in FIG. 9 may alternatively be a chip, a chip system, or a processor that supports the network device in implementing the method, or may be a logical module or software that can implement all or some functions of the network device.

In this embodiment, for example, a first measurement target is frequency #1, a first time window is SMTC #1, a first offset is offset #1, a second offset is offset #2, and a third offset is offset #3. It may be understood that the following is merely an example for description.

S910: The network device sends message #c to the terminal device.

Correspondingly, the terminal device receives message #c from the network device.

Specifically, message #c includes configuration information #3 of frequency #1, and configuration information #1 may indicate SMTC #1, offset #1 of SMTC #1, and a period and duration of SMTC #1.

In an optional understanding, configuration information #1 includes SMTC #1, offset #1 of SMTC #1, and the period and the duration of SMTC #1, or the terminal device can obtain SMTC #1, offset #1 of SMTC #1, and the period and the duration of SMTC #1 based on an indication of configuration information #1.

SMTC #1 is associated with one or more target cells.

For example, message #c may be a system message.

S920: The terminal device performs measurement based on offset #1.

S930: The terminal device determines offset #2.

After the terminal device measures frequency #1 by using offset #1, the terminal device adjusts offset #1 by using offset #2.

If frequency #1 is an NTN frequency, the terminal device determines offset #2 based on a propagation delay difference between a serving cell and the one or more target cells associated with SMTC #1.

The propagation delay difference may be understood as a difference between a propagation delay between a network device to which the one or more target cells belong and the terminal device and a propagation delay between a network device to which a first serving cell belongs and the terminal device.

If frequency #1 is an NTN frequency, the terminal device may assume that a real propagation delay of the target cell is 0.

Specifically, the terminal device determines cell #2 from the one or more target cells associated with SMTC #1, and determines offset #2 based on a propagation delay difference between cell #2 and a serving cell.

The terminal device may determine cell #2 based on indication information of the network device.

For example, the terminal device may receive indication information #3 from the network device, where indication information #3 indicates an ID of cell #2.

For another example, the terminal device may receive indication information #4 from the network device, where indication information #4 indicates an ID of ephemeris #2.

Specifically, the terminal device may determine, based on the ID of ephemeris #2, cell #2 corresponding to ephemeris #2.

Alternatively, the terminal device may directly determine cell #2 based on the ID of ephemeris #2.

It should be understood that when frequency #1 is an NTN frequency, the terminal device may receive indication information #4 from the network device.

Specifically, the terminal device determines an assumed propagation delay difference corresponding to SMTC #1; the terminal device determines a real propagation delay difference, at a measurement moment, between the serving cell and the one or more target cells associated with SMTC #1; and a difference between the assumed propagation delay difference and the real propagation delay difference may be used as offset #2.

For example, configuration information #1 of frequency #1 indicates offset #1.
a. The terminal device determines, based on an indication of the network device or a predefined value, the assumed propagation delay difference (PDD-a) corresponding to SMTC #1.

For example, a standard specifies that PDD-a corresponding to SMTC offset #1 broadcast through an NW is equal to X. For example, X=0, that is, it is assumed that a PD of a neighboring cell is the same as a PD of the serving cell.

For another example, an NW indicates a value of PDD-a corresponding to SMTC offset #1.

b. The terminal device determines a real propagation delay difference (PDD-r), at a measurement moment, between the serving cell and the one or more target cells associated with SMTC #1.

If the target cell is an NTN neighboring cell, the terminal device determines a real PD of the neighboring cell by using parameters such as location information of the terminal device, ephemeris information of the neighboring cell, and common TA/K_Mac indicated by the network device.

c. The terminal device determines that an adjustment value of offset #1 is (PDD-r-PDD-a).

S940: The terminal device performs measurement based on offset #2.

S950: The network device adjusts offset #2.

In the connected mode, when frequency #a is an NTN frequency, the network device adjusts offset #2 based on a PDD reported by the terminal device.

According to the foregoing technical solution, if the serving cell has timing information of the to-be-measured target cell, the network device may configure the first offset of the SMTC, so that the first measurement target can be measured in the idle mode or the inactive mode. Further, the first offset may be adjusted by using the second offset, to ensure that when the propagation delay of the serving cell changes, an SSB of a TN cell is always within the SMTC.

It may be understood that, in this application, first and second are merely for differentiation for ease of description, and are not for limiting the scope of embodiments of this application. For example, different information is differentiated.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that, in the foregoing method embodiments, the method and the operation implemented by the device may also be implemented by a component (for example, a chip or a circuit) of the device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 10 is a diagram of a structure of a communication apparatus according to an embodiment of this application.

The apparatus 1000 includes a transceiver module 1010 and a processing module 1020. The transceiver module 1010 may be configured to implement a corresponding communication function, and the processing module 1020 may be configured to process data.

Optionally, the transceiver module 1010 may also be referred to as a communication interface or a communication unit, and includes a sending unit and/or a receiving unit. The transceiver module 1010 may be a transceiver (including a transmitter and/or a receiver), an input/output interface (including an input interface and/or an output interface), a pin, a circuit, or the like. The transceiver module 1010 may be configured to perform a sending step and/or a receiving step in the foregoing method embodiments.

Optionally, the processing module 1020 may be a processor (which may include one or more processors), a processing circuit having a processor function, or the like, and may be configured to perform a step other than sending and receiving in the foregoing method embodiments.

Optionally, the apparatus 1000 further includes a storage unit. The storage unit may be a memory, an internal storage unit (for example, a register or a cache), an external storage unit (for example, a read-only memory or a random access memory), or the like. The storage unit is configured to store instructions. The processing module 1020 executes the instructions stored in the storage unit, so that the communication apparatus performs the foregoing method.

In a design, the apparatus 1000 may be configured to perform an action performed by the terminal device in the foregoing method embodiments. For example, the apparatus 1000 may be configured to perform an action performed by the terminal device in the foregoing method 800. In this case, the apparatus 1000 may be a component of the terminal device, the transceiver module 1010 is configured to perform a receiving/sending related operation of the terminal device in the foregoing method, and the processing module 1020 is configured to perform a processing-related operation of the terminal device in the foregoing method embodiment.

Specifically, the transceiver module 1010 is configured to receive configuration information of a first measurement target, where the configuration information of the first measurement target indicates a first time window, and the first time window is associated with one or more target cells. The processing module 1020 is used by the terminal device to determine a first offset of the first time window, where the first offset is a time domain position of the first time window relative to a first serving cell. The processing module 1020 is configured to measure the first measurement target in the first time window.

It should be understood that the transceiver module 1010 and the processing module 1020 may further perform other operations performed by the terminal device in the foregoing methods 800 and 900. Details are not described herein again.

In a design, the apparatus 1000 may be configured to perform an action performed by the network device in the foregoing method embodiments. For example, the apparatus 1000 may be configured to perform an action performed by the network device in the foregoing methods 800 and 900. In this case, the apparatus 1000 may be a component of the network device, the transceiver module 1010 is configured to perform a receiving/sending related operation of the network device in the foregoing method, and the processing module 1020 is configured to perform a processing-related operation of the network device in the foregoing method embodiment.

Specifically, the transceiver module 1010 is configured to send configuration information of a first measurement target, where the configuration information of the first measurement target indicates a first time window, the first time window is associated with one or more target cells, and the configuration information of the first measurement target is used by a terminal device to measure the first measurement target in the first time window. The transceiver module 1010 is further configured to receive fifth indication information, where the fifth indication information is at least one of a first offset, a sum of the first offset and a second offset, and a frame number and frame header timing difference, the first offset is a time domain position of the first time window relative to a first serving cell, and the second offset is used to adjust the first offset. The processing module 1020 is configured to determine a third offset based on the fifth indication information, where the third offset is used by the terminal device to measure the first measurement target in a second time window in a connected mode.

It should be understood that the transceiver module 1010 and the processing module 1020 may further perform other operations performed by the network device in the foregoing methods 800 and 900. Details are not described herein again.

It should be understood that the apparatus 1000 herein is embodied in a form of a function unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 1000 may be specifically the network device in the foregoing embodiments, and may be configured to perform procedures and/or steps corresponding to the network device in the foregoing method embodiments. To avoid repetition, details are not described herein again.

The apparatus 1000 in each of the foregoing solutions has functions of implementing the corresponding steps performed by the terminal device in the foregoing methods, or the apparatus 1000 in each of the foregoing solutions has functions of implementing the corresponding steps performed by the network device in the foregoing methods. The function may be implemented by using hardware, or may be implemented by using hardware executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 1010 may alternatively be a transceiver circuit (for example, the transceiver circuit may include a receiver circuit and a transmitter circuit), and the processing module may be a processing circuit.

It should be noted that the apparatus in FIG. 10 may be the network element or the device in the foregoing embodiments, or may be a chip or a chip system, for example, a system-on-a-chip (system-on-a-chip, SoC). The transceiver module may be an input/output circuit or a communication interface. The processing module is a processor, a microprocessor, or an integrated circuit integrated on the chip. This is not limited herein.

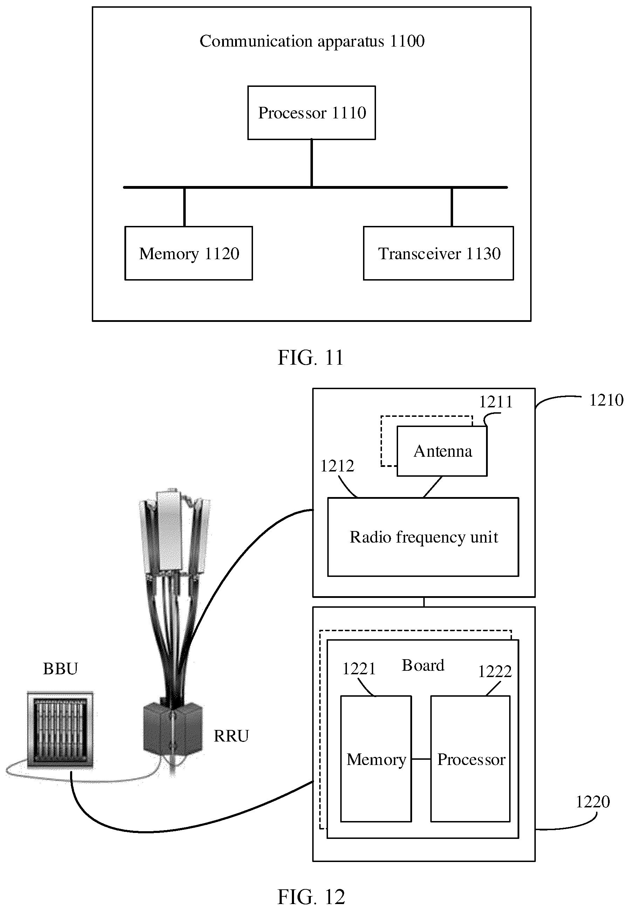

FIG. 11 is a block diagram of a structure of a communication apparatus according to an embodiment of this application. The communication apparatus 1100 shown in FIG. 11 includes a processor 1110, a memory 1120, and a transceiver 1130. The processor 1110 is coupled to a memory 1120, and is configured to execute instructions stored in the memory 1120, to control the transceiver 1130 to send a signal and/or receive a signal.

It should be understood that the processor 1110 and the memory 1120 may be combined into one processing apparatus, and the processor 1110 is configured to execute program code stored in the memory 1120 to implement the foregoing functions. During specific implementation, the memory 1120 may be integrated into the processor 1110, or may be independent of the processor 1110. It should be understood that the processor 1110 may correspond to each processing unit in the foregoing communication apparatus, and the transceiver 1130 may correspond to each receiving unit and sending unit in the foregoing communication apparatus.

It should be further understood that the transceiver 1130 may include a receiver (or referred to as a receiver machine) and a transmitter (or referred to as a transmitter machine). The transceiver may further include one or more antennas. The transceiver may alternatively be a communication interface or an interface circuit.

Specifically, the communication apparatus 1100 may correspond to the terminal device and the network device in the method 700 and the method 800 according to embodiments of this application. It should be understood that a specific process in which the units perform the foregoing corresponding steps is described in detail in the foregoing method embodiments. For brevity, details are not described herein.

When the communication apparatus 1100 is a chip, the chip includes an interface unit and a processing unit. The interface unit may be an input/output circuit or a communication interface. The processing unit may be a processor, a microprocessor, or an integrated circuit integrated on the chip.

When the apparatus in this embodiment of this application is a network device, the apparatus may be shown in FIG. 12. The apparatus may include one or more radio frequency units, such as a remote radio unit (remote radio unit, RRU) 1210 and one or more baseband units (baseband unit, BBU) (which may also be referred to as a digital unit (digital unit, DU)) 1220. The RRU 1210 may be referred to as a transceiver module. The transceiver module may include a sending module and a receiving module, or the transceiver module may be a module that can implement sending and receiving functions. The transceiver module may correspond to the transceiver module 1010 in FIG. 10, that is, the transceiver module may perform an action performed by the transceiver module 1010. Optionally, the transceiver module may also be referred to as a transceiver, a transceiver circuit, or the like, and may include at least one antenna 1211 and a radio frequency unit 1212. The RRU 1210 is mainly configured to: receive and send radio frequency signals, and perform conversion between a radio frequency signal and a baseband signal. The BBU 1220 is mainly configured to perform baseband processing, control a base station, and the like. The RRU 1210 and the BBU 1220 may be physically disposed together, or may be physically separated, that is, in a distributed base station.

The BBU 1220 is a control center of the base station, may also be referred to as a processing module, may correspond to the processing module 1020 in FIG. 10, and is mainly configured to complete a baseband processing function, such as channel coding, multiplexing, modulation, and spectrum spreading. In addition, the processing module may perform an action performed by the processing module 1020. For example, the BBU (processing module) may be configured to control the base station to perform an operation procedure related to the network device in the foregoing method embodiments.

In an example, the BBU 1220 may include one or more boards, and a plurality of boards may jointly support a radio access network (for example, an LTE network) of a single access standard, or may separately support radio access networks (for example, an LTE network, a 5G network, or another network) of different access standards. The BBU 1220 further includes a memory 1221 and a processor 1222. The memory 1221 is configured to store necessary instructions and necessary data. The processor 1222 is configured to control the base station to perform a necessary action, for example, configured to control the base station to perform an operation procedure related to the network device in the foregoing method embodiments. The memory 1221 and the processor 1222 may serve one or more boards. In other words, a memory and a processor may be disposed on each board. Alternatively, a plurality of boards may share a same memory and a same processor. In addition, a necessary circuit may further be disposed on each board.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

In embodiments of this application, the term such as "example" or "for example" is for representing giving an example, an illustration, or a description. Any embodiment or design scheme described as an "example" in this application should not be explained as being more preferred or having more advantages than another embodiment or design scheme. Specifically, the term "example" is used to present a concept in a specific manner.

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. Further, these specific features, structures, or characteristics may be combined in one or more embodiments in any suitable manner.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that the UE or the base station performs corresponding processing in an objective situation, are not intended to limit time, do not require the UE or the base station to necessarily perform a determining action during implementation, and do not mean another limitation.

In addition, the terms "system" and "network" are usually used interchangeably in this specification. The term "and/or" in this specification is merely an association relationship of associated objects, and indicates that three relationships may exist. For example, A and/or B may indicate the following three cases: Only A exists, both A and B exist, and only B exists.

The term "at least one of ..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based on only A. B may alternatively be determined based on A and/or other information. The terms "include", "contain", "have", and variations thereof all mean "including but not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, configuration information of a first measurement target, wherein the configuration information of the first measurement target indicates a first time window, and the first time window is associated with one or more target cells;
determining, by the terminal device, a first offset of the first time window, wherein the first offset is a time domain position of the first time window based on a timing reference of a first serving cell; and
measuring, by the terminal device, the first measurement target in the first time window.

2. The method according to claim 1, wherein the determining, by the terminal device, a first offset of the first time window comprises:
determining, by the terminal device, the first offset based on locations of synchronization signal blocks SSBs of the one or more target cells associated with the first time window.

3. The method according to claim 2, wherein the terminal device does not receive the first offset from a network device.

4. The method according to claim 2 or 3, wherein the determining, by the terminal device, the first offset based on locations of synchronization signal blocks SSBs of the one or more target cells associated with the first time window comprises:
determining, by the terminal device, a first cell from the one or more target cells associated with the first time window; and
determining, by the terminal device, the first offset based on a location of an SSB of the first cell.

5. The method according to claim 4, wherein the method further comprises:
receiving, by the terminal device, first indication information, wherein the first indication information indicates an identifier of the first cell.

6. The method according to claim 4, wherein the method further comprises:
receiving, by the terminal device, second indication information, wherein the second indication information indicates an identifier of a first ephemeris; and
determining, by the terminal device based on the identifier of the first ephemeris, an identifier of the first cell corresponding to the first ephemeris.

7. The method according to any one of claims 1 to 6, wherein the first measurement target is a terrestrial network TN frequency, and the method further comprises:
determining, by the terminal device, a second offset based on a propagation delay of the first serving cell, wherein the second offset is used to adjust the first offset.

8. The method according to any one of claims 1 to 6, wherein the method further comprises:
determining, by the terminal device, a second offset based on a propagation delay difference between the first serving cell and the one or more target cells associated with the first time window, wherein the second offset is used to adjust the first offset, the propagation delay difference is a difference between a first delay and a second delay, the first delay is a propagation delay between a network device to which the one or more target cells belong and the terminal device, and the second delay is a propagation delay between a network device to which the first serving cell belongs and the terminal device.

9. The method according to claim 8, wherein the determining, by the terminal device, a second offset based on a propagation delay difference between the first serving cell and the one or more target cells associated with the first time window comprises:
determining, by the terminal device, a second cell from the one or more target cells associated with the first time window; and
determining, by the terminal device, the second offset based on a propagation delay difference between the second cell and the first serving cell.

10. The method according to claim 9, wherein the method further comprises:
receiving, by the terminal device, third indication information, wherein the third indication information indicates an identifier of the second cell.

11. The method according to claim 10, wherein the method further comprises:
receiving, by the terminal device, fourth indication information, wherein the fourth indication information indicates an identifier of a second ephemeris; and
determining, by the terminal device based on the identifier of the second ephemeris, an identifier of the second cell corresponding to the second ephemeris.

12. The method according to any one of claims 8 to 11, wherein the first measurement target is a TN frequency, and when the terminal device determines the second offset of the first measurement target based on the propagation delay difference between the first serving cell and the one or more target cells associated with the first time window, the terminal device assumes that a real propagation delay of the target cell is 0.

13. The method according to any one of claims 1 to 12, wherein the method further comprises:
when the terminal device enters a connected mode from an inactive mode or an idle mode, sending, by the terminal device, fifth indication information, wherein the fifth indication information is the first offset; or
the fifth indication information is a sum of the first offset and the second offset; or
the fifth indication information is a frame number and frame header timing difference, wherein
the fifth indication information is used by the network device to determine a third offset, and the third offset is used by the terminal device to measure the first measurement target in a second time window in the connected mode.

14. A communication method, comprising:
determining, by a network device, configuration information of a first measurement target, wherein the configuration information of the first measurement target indicates a first time window, the first time window is associated with one or more target cells, the configuration information of the first measurement target does not indicate a first offset, and the first offset is a time domain position of the first time window based on a timing reference of a first serving cell; and
sending, by the network device, the configuration information of the first measurement target, wherein the configuration information of the first measurement target is used by a terminal device to measure the first measurement target in the first time window.

15. The method according to claim 14, wherein the method further comprises:
sending, by the network device, first indication information, wherein the first indication information indicates an identifier of a first cell, and the identifier of the first cell is used by the terminal device to determine the first offset.

16. The method according to claim 14, wherein the method further comprises:
sending, by the network device, second indication information, wherein the second indication information indicates an identifier of a first ephemeris, and the identifier of the first ephemeris is used by the terminal device to determine the first offset.

17. The method according to any one of claims 14 to 16, wherein the method further comprises:
sending, by the network device, third indication information, wherein the third indication information indicates an identifier of a second cell, the identifier of the second cell is used by the terminal device to determine the second offset, and the second offset is used to adjust the first offset.

18. The method according to any one of claims 14 to 16, wherein the method further comprises:
sending, by the network device, fourth indication information, wherein the fourth indication information indicates an identifier of a second ephemeris, the identifier of the second ephemeris is used by the terminal device to determine the second offset, and the second offset is used to adjust the first offset.

19. The method according to any one of claims 14 to 18, wherein when the terminal device enters a connected mode from an inactive mode or an idle mode, the method further comprises:
receiving, by the network device, fifth indication information, wherein the fifth indication information is at least one of the first offset, a sum of the first offset and the second offset, and a frame number and frame header timing difference, the first offset is the time domain position of the first time window based on the timing reference of the first serving cell, and the second offset is used to adjust the first offset; and
determining, by the network device, a third offset based on the fifth indication information, wherein the third offset is used by the terminal device to measure the first measurement target in a second time window in the connected mode.

20. The method according to claim 19, wherein the method further comprises:
when the first measurement target is a TN frequency, adjusting, by the network device, the third offset based on a terminal-specific timing advance TA reported by the terminal device.

21. A data communication method, comprising:
determining, by a network device, configuration information of a first measurement target, wherein the configuration information of the first measurement target indicates a first time window and a first offset, the first time window is associated with one or more target cells, and the first offset is a time domain position of the first time window based on a timing reference of a first serving cell; and
sending, by the network device, the configuration information of the first measurement target, wherein the configuration information of the first measurement target is used by a terminal device to measure the first measurement target in the first time window.

22. The method according to claim 21, wherein the method further comprises:
sending, by the network device, third indication information, wherein the third indication information indicates an identifier of a second cell, the identifier of the second cell is used by the terminal device to determine the second offset, and the second offset is used to adjust the first offset.

23. The method according to claim 21, wherein the method further comprises:
sending, by the network device, fourth indication information, wherein the fourth indication information indicates an identifier of a second ephemeris, and the identifier of the second ephemeris is used by the terminal device to determine the second offset.

24. A communication apparatus, comprising a unit configured to perform the method according to any one of claims 1 to 13 or 14 to 23.

25. A communication apparatus, comprising a processor, wherein the processor is coupled to a memory, the memory is configured to store a computer program or instructions, and the processor is configured to execute the computer program or the instructions in the memory, so that the apparatus performs the method according to any one of claims 1 to 13, or performs the method according to any one of claims 14 to 23.

26. A computer-readable storage medium, wherein the computer-readable storage medium stores a computer program or instructions, and when the computer program or the instructions are run on a computer, the computer is enabled to perform the method according to any one of claims 1 to 13 or the method according to any one of claims 14 to 23.

27. A chip system, comprising a processor, configured to invoke a computer program from a memory and run the computer program, so that a communication device on which the chip system is installed performs the method according to any one of claims 1 to 13, or performs the method according to any one of claims 14 to 23.

28. A computer program product, wherein when the computer program product runs on a computer, the computer is enabled to perform steps of the method according to any one of claims 1 to 13, or perform steps of the method according to any one of claims 14 to 23.
